# EUROPEAN PATENT APPLICATION

(11) **EP 4 404 534 A1**
(43) Date of publication of application: **24.07.2024**
(21) Application number: 24152705.0
(22) Date of filing: 18.01.2024
(51) Int. Cl.: H04L 61/5061, H04L 45/02, H04L 9/40

(54) **PROVIDER DEFINED ROUTE CONTROLS FOR TENANT-OWNED GATEWAYS IN A MULTI-TENANT SOFTWARE-DEFINED DATA CENTER**

(30) Priority: 20.01.2023 IN 202341004106; 03.04.2023 US 202318129913
(71) Applicant: VMware LLC, Palo Alto, CA 94304 (US)
(72) Inventor: Goliya, Abhishek, 411045 Pune (IN); Vaidya, Sachin Mohan, 411045 Pune (IN); Vigneron, Thomas Pierre Labor, Palo Alto, 94304 (US)
(74) Representative: Dilg, Haeusler, Schindelmann Patentanwaltsgesellschaft mbH

(57) **Abstract**

The technology disclosed herein enables. In a particular example, a control plane for a software-defined data center performs a method including identifying a tenant network address space for use by a tenant of the software-defined data center. The method further includes generating a filter rule for a tenant gateway between the tenant network address space and a provider gateway outside of the tenant network address space. Also, the method includes implementing the filter rule in the tenant gateway, wherein the filter rule prevents the tenant gateway from advertising network addresses outside of the tenant network address space.

## Description

### RELATED APPLICATIONS

Benefit is claimed under 35 U.S.C. 119(a)-(d) to Foreign Application Serial No. 202341004106 filed in India entitled "PROVIDER DEFINED ROUTE CONTROLS FOR TENANT-OWNED GATEWAYS IN A MULTI-TENANT SOFTWARE-DEFINED DATA CENTER", on January 20, 2023, by VMware, Inc., which is herein incorporated in its entirety by reference for all purposes.

### TECHNICAL BACKGROUND

A software-defined data center virtualizes computing, storage, network connection, etc., components of a typical data center on physical hardware, such as that of a physical data center. Virtualizing data center components enables computing, storage, and network configurations that are not constrained by the physical arrangement of hardware. In fact, some software-defined data centers are capable of hosting multiple tenants. Multi-tenancy enables a provider of data center hardware infrastructure to host independent software-defined data centers for tenants (e.g., customers of the provider) on the same physical hardware. Each tenant can configure its software-defined data center as needed for each tenant's purposes, assuming the configuration does not exceed limits of the physical hardware or provider instituted limitations (e.g., based on a service agreement between the provider and the tenant). The provider allocates address space to each tenant and, should a tenant advertise addresses outside of its allocated network addresses, conflicts can occur with another tenant (e.g., a tenant actually assigned the advertised addresses).

### SUMMARY

The technology disclosed herein enables provider control of route advertisements from a tenant gateway in a software-defined data center. In a particular example, a control plane for a software-defined data center performs a method including identifying a tenant network address space for use by a tenant of the software-defined data center. The method further includes generating a filter rule for a tenant gateway between the tenant network address space and a provider gateway outside of the tenant network address space. Also, the method includes implementing the filter rule in the tenant gateway, wherein the filter rule prevents the tenant gateway from advertising network addresses outside of the tenant network address space.

In other examples, an apparatus performs the above-recited method and computer readable storage media directs a processing system to perform the above-recited method.

### BRIEF DESCRIPTION OF THE DRAWINGS

Figure 1 illustrates an example architecture for controlling route advertisements from tenant-controlled gateways in a software-defined data center.
Figure 2 illustrates an operation to control route advertisements from tenant-controlled gateways in a software-defined data center.
Figure 3 illustrates an implementation for controlling route advertisements from tenant-controlled gateways in a software-defined data center.
Figure 4 illustrates a logical arrangement of a software-defined data center that controls route advertisements from tenant-controlled gateways in the software-defined data center.
Figure 5 illustrates a network address space in a software-defined data center that controls route advertisements from tenant-controlled gateways in the software-defined data center.
Figure 6 illustrates an operation to control route advertisements from tenant-controlled gateways in a software-defined data center.
Figure 7 illustrates an operation to control route advertisements from tenant-controlled gateways in a software-defined data center.
Figure 8 illustrates a computing system for controlling route advertisements from tenant-controlled gateways in a software-defined data center.

### DETAILED DESCRIPTION

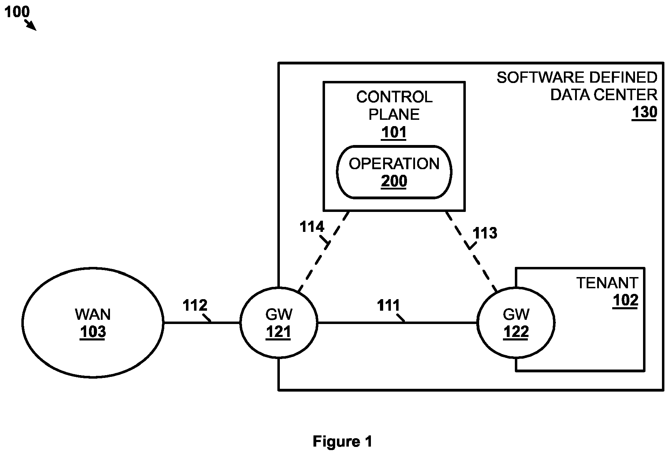

Figure 1 illustrates an example architecture 100 for controlling route advertisements from tenant-controlled gateways in a software-defined data center. Architecture 100 includes control plane 101, tenant 102, provider gateway 121, and tenant gateway 122, which are part of software-defined data center 130, and Wide Area Network (WAN) 103. Provider gateway 121 and tenant gateway 122 communicate over logical communication link 111, such as an overlay network connection, which may be implemented as a tunnel using a tunneling protocol such as Geneve or VXLAN. WAN 103 and provider gateway 121 communicate over communication link 112. Control plane 101 controls or configures provider gateway 121 over control link 114. Control plane 101 controls or configures tenant gateway 122 over control link 113. Software-defined data center 130 is a virtualized data center executing on physical data center hardware. A software-defined data center is a logical aggregation of physical resources including compute, data storage, and networking, which are then allocated based on user requirements and availability. For example, administrators or users may deploy application software on virtual compute nodes such as virtual machines or containers, which can then access logical storage device abstractions, i.e., virtual disks, which are backed by local physical storage or centralized storage such as a storage area network (SAN) or other storage mechanism. In addition, the virtual compute nodes may connect to each other and/or the outside world via logical networks. All these physical resources may be controlled and defined in software using control plane 101. Control plane 101 may include different controllers for different physical resources such as a software defined network (SDN) control plane may be distinct from a compute control plane, sometimes referred to as a virtual infrastructure manager (VIM). In some instances, resources for a software-defined data center may be allocated to a plurality of logically isolated tenants. Logical isolation prevents inadvertent network or storage accessibility across tenants and ensures fair sharing of physical resources. Software-defined data center 130 hosts only tenant 102 in this example but may host one or more additional tenants in other examples.

Tenant 102 is a portion of software-defined data center 130 devoted to a particular entity (e.g., a customer of a provider operating software-defined data center 130). Tenant 102 may include any number of virtualized networking, storage, and computing components, such as virtual machines, virtualized switches, virtualized data storage, or other type of data center component. Tenant gateway 122 is part of tenant 102 and is a gateway for data entering and leaving the subnet or subnets of tenant 102. Tenant gateway 122 is owned by tenant 102 in the sense that tenant 102 controls the functionality of tenant gateway 122 (e.g., controls how communication traffic is handled by tenant gateway 122). Provider gateway 121 is owned (i.e., controlled) by the provider of software-defined data center 130. Provider gateway 121 is a gateway to WAN 103. Communication traffic exchanged over WAN 103 by tenant 102 passes through provider gateway 121 and tenant gateway 122. In some examples, provider gateway 121 is a shared gateway for multiple tenants of software-defined data center 130 to access WAN 103.

While only provider gateway 121 is included in software-defined data center 130, other examples may include one or more additional provider gateways. An additional provider gateway may connect to WAN 103, to another network, to a computing system providing a service (e.g., application used by tenant 102), or to some other computing system with which tenant 102, or another tenant of software-defined data center 130, may communicate - including combinations thereof. Similarly, while only tenant gateway 122 is included in tenant 102, one or more additional tenant gateways may be implemented in tenant 102 to connect tenant 102 to tenant gateway 122 or other provider gateways of software-defined data center 130.

Control plane 101 may be, or include, an SDN controller that controls the virtualized components of software-defined data center 130, which includes provider gateway 121 and tenant gateway 122. Control plane 101 may also instantiate virtual machines, virtualized storage, virtualized networking, or other type of virtualized computing components and configure those components in accordance with the desires of the provider and tenants of software-defined data center 130. In particular, control plane 101 performs operation 200 to control tenant gateway 122 to limit network addresses advertised therefrom.

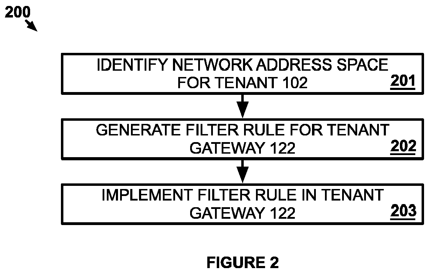

Figure 2 illustrates operation 200 to control route advertisements from tenant-controlled gateways in a software-defined data center. In operation 200, control plane 101 identifies a tenant network address space for use by tenant 102 (201). The tenant network address space is the network addresses that tenant 102 can use for computing elements therein. More specifically, the tenant network address space is an address space that tenant 102 control plane 101 will allow to be advertised from tenant gateway 122. While tenant 102 may be able to use network addresses other than those in its tenant network address space, tenant 102 will not be allowed to advertise network addresses other than those in its tenant network address space. As such, the network addresses in the tenant network address space identified by control plane 101 may be referred to as public network addresses. A network address space is commonly defined by one or more network address prefixes, which include all addresses having the defined prefixes. Internet Protocol (IP) addresses are the typical network address format for Layer 3 networking used by software-defined data center 130 but other address types may be used instead. Control plane 101 may determine the tenant network address space itself or may receive an instruction defining the tenant network address space from another system component or human administrator. Having its own tenant network address space enables tenant 102 to have its own publicly advertised subnet(s) within software-defined data center 130 that it can configure as desired. The size of the tenant network address space (i.e., the number of addresses included therein) may be based on a size requested by tenant 102, a size limit required by the provider of software-defined data center 130, or based on some other factor - including combinations thereof. Whichever tenant network address space control plane 101 identifies, control plane 101 ensures that the tenant network address space does not conflict with tenant network address spaces of other tenants of software-defined data center 130. Multiple tenants having the same address(es) in their address space may cause routing issues should communication traffic be directed to one of those addresses. As tenant 102 changes its component configurations (e.g., adding/subtracting virtual machines therein), the tenant network address space may change as well. For instance, tenant 102 may request additional addresses when scaling up its data center operations in software-defined data center 130.

Control plane 101 generates a filter rule for tenant gateway 122 between the tenant network address space of tenant 102 and provider gateway 121, which is outside of the tenant network address space (202). The filter rule is formatted for use by a filtering mechanism of a routing protocol used by tenant gateway 122 to advertise routing information for addresses used within tenant 102. The routing protocol may be Border Gateway Protocol (BGP), Open Shortest Path First (OSPF), or some other routing protocol for advertising network routes. The filter rule may use a whitelist model or a blacklist model, which may depend on requirements of the routing protocol used by tenant gateway 122, to advertise network addresses in tenant 102. A rule in the whitelist model only allows advertisement of certain network addresses (i.e., those that are whitelisted). A rule in the blacklist model disallows advertisement of certain network addresses (i.e., those that are blacklisted). The tenant network address space addresses would be included in the whitelist but not in the blacklist. In the blacklist model, the filter rule would list at least those network addresses of software-defined data center 130 that are in use elsewhere (e.g., addresses assigned to another tenant of software-defined data center 130).

Control plane 101 implements the filter rule in tenant gateway 122 (203). Implementing the filter rule may include passing the filter rule as generated (e.g., in a file containing the filter rule) to tenant gateway 122 over control link 113. In another example, implementing the filter rule may include control plane 101 exchanging control messages with tenant gateway 122 to configure the requirements of the filter rule on tenant gateway 122 (e.g., an instruction(s) tells tenant gateway 122 that a filter rule should be implemented and provides the network addresses that should be allowed/blocked from advertisement based on the network address space of tenant 102). Other manners of implementing the filter rule may also be used depending on the mechanisms for implementing and enforcing filter rules in tenant gateway 122. Once implemented, the filter rule prevents tenant gateway 122 from advertising network addresses outside of the tenant network address space.

Since tenant gateway 122 is owned by tenant 102, tenant 102 itself may have one or more additional filter rules implemented in tenant gateway 122. Tenant gateway 122, therefore, enforces the filter rule generated and implemented by control plane 101 as a provider filter rule along with the tenant filter rules implemented by tenant 102. When implementing the filter rule, control plane 101 may provide instructions on how tenant gateway 122 should prioritize the provider filter rule relative to tenant filter rules. For example, the provider filter rule may be enforced before tenant filter rules, after tenant filter rules, somewhere in between, or simultaneously, as long as the filter rule is implemented in an order that ensures tenant gateway 122 does not advertise network addresses outside of the network address space of tenant 102. In some examples, tenant 102 may not be aware that the provider filter rule even exists and is being enforced by tenant 102. For instance, a user interface for configuring tenant gateway 122 by an administrator of tenant 102 may not display, or otherwise present, the existence of the provider filter rule in addition to any tenant-provided filter rules. In other examples, tenant gateway 122 may indicate to tenant 102 that the provider filter rule is being enforced by tenant gateway 122 while not allowing tenant 102 to modify or otherwise affect enforcement of the provider filter rule. For instance, the user interface for the administrator may display a greyed-out indication of the provider filter rule in a list of filter rules implemented by the tenant.

Advantageously, the filter rule implemented in tenant gateway 122 by control plane 101 on behalf of the provider of software-defined data center 130 ensures tenant gateway 122 does not advertise routes to network addresses outside of the network address space of tenant 102. While tenant 102 is typically notified of its assigned network address space (e.g., by control plane 101) so that tenant 102 can create a subnet within that assigned address space, circumstances can arise causing tenant 102 to include addresses outside of the assigned network address space. For instance, one or more virtual machines in tenant 102 may inadvertently be assigned network addresses outside of the assigned address space. When tenant gateway 122 applies the provider filter rule to those addresses, the filter rule directs tenant gateway 122 to not advertise routes to those improper network addresses. In some examples, tenant gateway 122 may provide feedback to tenant 102 (e.g., to an administrative user for tenant 102) indicating that the provider filter rule has caught network addresses outside of the assigned network address space. In response to the notification, tenant 102 has the opportunity to resolve any issue that caused the improper network addresses to be used within tenant 102.

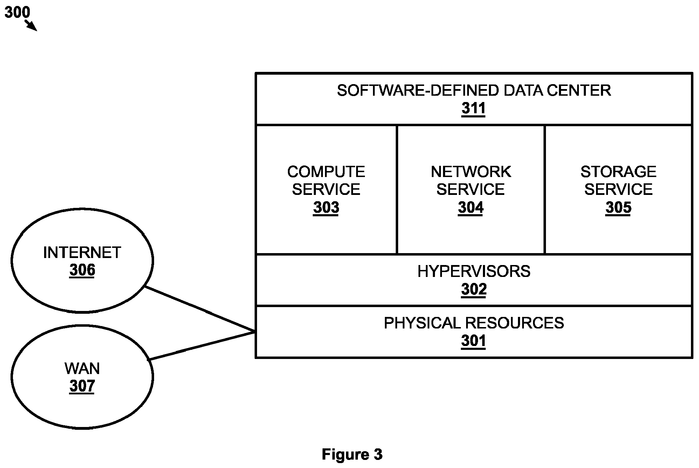

Figure 3 illustrates implementation 300 for controlling route advertisements from tenant-controlled gateways in a software-defined data center. Implementation 300 includes physical resources 301, Internet 306, and WAN 307. Physical resources 301 include processing resources (e.g., processing circuitry, central processing units, graphics processing units, data processing units, etc.), memory resources (e.g., random access memory, hard disk drive(s), flash memory, network attached storage systems, etc.), networking resources (e.g., wired and/or wireless networking circuitry, routers, switches, gateways, etc.), or any other type of resource that a physical data center may include. The networking resources of physical resources 301 connect physical resources 301 to Internet 306 and WAN 307. Although, in other examples, physical resources 301 may connect to one or more different networks than those used in this example.

Hypervisors 302 execute on physical resources 301 (e.g., on respective computer server systems of physical resources 301) to virtualize data center components. Other types of virtualization platforms may be used in addition to, or instead of, hypervisors in other examples. Hypervisors 302 virtualize data center components, such as those included in physical resources 301, to provide compute service 303, network service 304, and storage service 305 that work together to form software-defined data center 311. Virtualizing services 303-305 enables software-defined data center 311 to have more flexibility than would be allowed with a physical data center. For instance, the number of servers and storage space can be dynamic depending on what is needed at any given time (i.e., virtual machines can be instantiated and taken down depending on demand and storage allowed to those virtual machines can change). Similarly, network topology is not fixed to the topology of the network linking systems in the underlying physical resources 301. Additionally, software-defined data center 311 can host independent tenant data centers therein on the same physical resources 301, as discussed below.

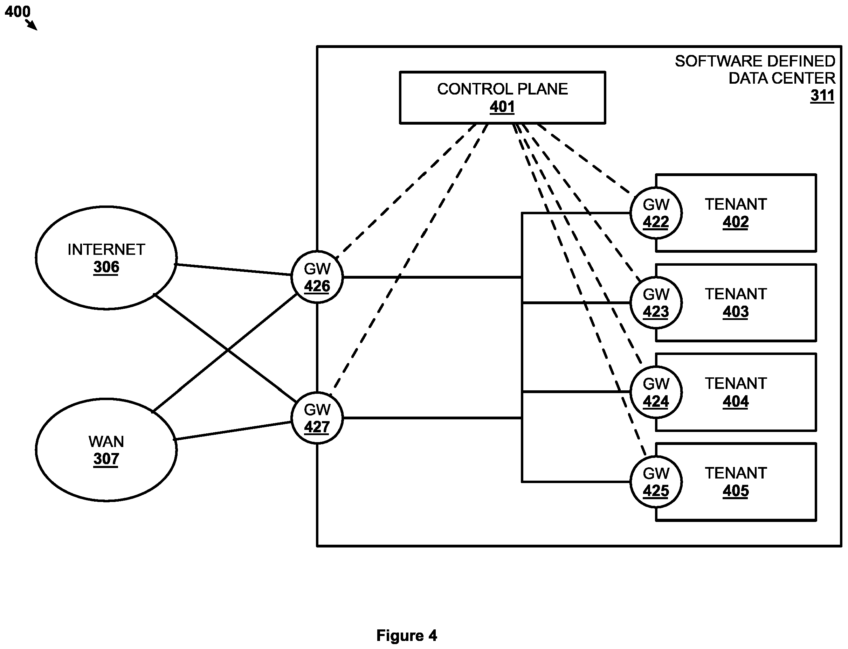

Figure 4 illustrates logical arrangement 400 of software-defined data center 311 that controls route advertisements from tenant-controlled gateways in the software-defined data center. In logical arrangement 400, software-defined data center 311 is hosting tenants 402-405. Each of tenants 402-405 is a software-defined data center controlled by an entity, such as a customer of the provider of software-defined data center 311. The configuration and operation of tenants 402-405 (e.g., the virtual machines and internal network topology) is controlled by the respective tenants. Control plane 401 controls virtualized components of software-defined data center 311 to operate as desired by the provider of software-defined data center 311 and tenants 402-405. For example, if tenant 403 requests another virtual machine therein, control plane 401 controls software-defined data center 311 to instantiate the requested virtual machine in a subnet of tenant 403 using parameters defined by tenant 403.

Each of tenants 402-405 includes a respective one of tenant gateways 422-425 through which data exchanged with tenants 402-405 passes. Specifically, each of tenants 402-405 has its own subnet within software-defined data center 311 and the subnet is accessible through tenant gateways 422-425. While there is only one tenant gateway per tenant in this example, tenants may include additional gateways (e.g., for high availability or load bearing purposes) in other examples. Although it is possible that one of tenants 402-405 may exchange communications with another of tenants 402-405, a tenant will likely require communication traffic be exchanged outside of software-defined data center 311. Provider gateways 426-427 enable tenant gateways 422-425 to exchange communication traffic over Internet 306 and WAN 307. Provider gateways 426-427 are virtualized components in this example but may be part of physical resources 301 in other examples. In this example, provider gateways 426-427 are both connected to Internet 306 and WAN 307 but may only be connected to one of the networks in other examples. Likewise, software-defined data center 311 may include additional provider gateways connected to one or both of Internet 306 and WAN 307.

Tenant gateways 422-425 advertise routing information for network addresses used within the respective subnets of tenants 402-405. The routing information may be advertised using BGP, OSPF, or some other routing protocol. Provider gateways 426-427 and others of tenant gateways 422-425 receive the advertised routing information and route packets to their destination based on the routing information. For example, if tenant gateway 424 advertises a route that includes a network address, referred to as network address A in this example, then a packet directed to network address A received by provider gateway 426 from Internet 306 will be routed to tenant gateway 424 from provider gateway 426. Tenant gateway 424 then forwards the packet to the destination component assigned network address A within tenant 404. In that example, network address A is within a network address space assigned to tenant 404. Control plane 401 generates filter rules, as described below, to prevent tenant gateway 422, tenant gateway 423, and tenant gateway 425 from advertising routes to network address A or any other network address outside of the network address space assigned to respective tenant 402, tenant 403, and tenant 405. Without such a filter rule, tenant gateway 422, for example, could potentially also advertise a route for network address A, which would cause issues when provider gateway 426 receives a packet directed to network address A in the above example.

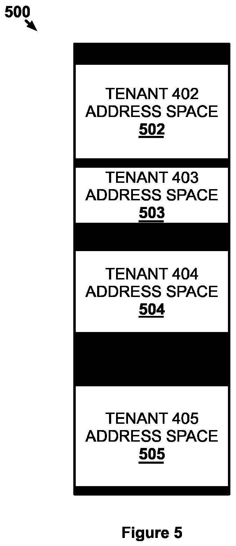

Figure 5 illustrates network address space 500 in software-defined data center 311 that controls route advertisements from tenant-controlled gateways in the software-defined data center. Network address space 500 represents a range of network addresses that are used by software-defined data center 311. These network addresses may be referred to as public network addresses for software-defined data center 311. For example, the bottom of network address space 500 may represent a network address at one end of the range and the top may represent an address at the other end of the range. In some cases, the range of network addresses in network address space 500 may not be contiguous as shown here. Blocks are shown in network address space 500 that represent portions of network address space 500 that are assigned to tenants 402-405. Address space 502 represents the address space for tenant 402, address space 503 represents the address space for tenant 403, address space 504 represents the address space for address space 504, and address space 505 represents the address space for tenant 405. While each address space is shown as a continuous block of network addresses, some examples may allow an address space that are not completely continuous. As mentioned previously, software-defined data centers enable tenants therein to be dynamic in their deployments. Should a tenant require more addresses, then control plane 401 may increase the size of the address space assigned to that tenant.

As can be seen in network address space 500, control plane 401 assigned address spaces to each of tenants 402-405 that do not overlap. Had the addresses overlapped, then multiple tenant routers may advertise routes to the addresses in that overlap, which can cause routing conflicts. While control plane 401 ensures tenant network address spaces do not overlap, there may be situations where one or more of tenant gateways 422-425 advertise routing information for network addresses outside of their assigned address spaces. For example, a component in tenant 405 may inadvertently be assigned a network address within address space 503 of tenant 403. Tenant gateway 425 may then advertise a route to that network address with tenant gateway 423 also advertising a route to that network address because the address is within address space 503. In another example, even if nothing in tenant 405 is assigned an address outside of address space 505, tenant gateway 425 may still erroneously advertise routes to network address prefixes including address space 504. Control plane 401, therefore, creates and implements filter rules in each of tenant gateways 422-425 to prevent tenant gateways 422-425 from advertising routes outside of their respective address spaces 502-505.

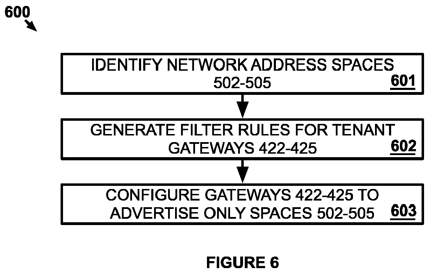

Figure 6 illustrates operation 600 to control route advertisements from tenant-controlled gateways in a software-defined data center. Operation 600 is performed by control plane 401 to implement filter rules in tenant gateways 422-425 that prevent tenant gateways 422-425 from advertising routes outside of their respective address spaces 502-505. In operation 600, control plane 401 identifies network address spaces 502-505 (601). Control plane 401 may identify address spaces 502-505 when each of address spaces 502-505 is determined for tenants 402-405. Alternatively, if one or more of tenants 402-405 are already operating in software-defined data center 311 when operation 600 begins control plane 401 may reference its own log for the network address spaces already assigned to those already operating tenants.

Control plane 401 then generates a filter rule for each of tenant gateways 422-425 (602). The filter rule for each of tenant gateways 422-425 prevents tenant gateways 422-425 from improperly advertising routing information. For example, the filter rule for tenant gateway 424 prevents tenant gateway 424 from advertising routes to addresses outside of address space 504. Control plane 401 then implements the generated filter rules by configuring tenant gateways 422-425 to advertise only routes for network addresses in respective address spaces 502-505 (603). Configuring tenant gateways 422-425 may depend on the routing protocol used between tenant gateways 422-425 and provider gateways 426-427. If BGP is used as the routing protocol, then gateways 422-427 are BGP peers and control plane 401 configures a mechanism of BGP at tenant gateways 422-425 to block certain address prefix advertisements. Similarly, if OSPF is used, then control plane 401 configures OSPF's mechanism for filtering out advertised routes. Tenant gateways 422-425 are owned by tenants 402-405 and, therefore, tenants 402-405 handle nearly all other configuration aspects of tenant gateways 422-425 without oversight by the provider of software-defined data center 311. As such, control plane 401 configures tenant gateways 422-425 in a manner that fulfills the purpose of the filter rules while not otherwise affecting each tenant's own configurations.

The process for merging the filter rule created by control plane 401 into tenant provided rules at tenant gateways 422-425 may differ between different routing protocols. If route advertisements are handled by a controller for VMware NSX@, which is a virtualization platform that may implement software-defined data center 311, then the filter rule generated by control plane 401 is included in a filter rule chain created by the controller. For example, control plane 401 may configure a filter rule chain for tenant gateway 422 to apply the provider filter rule (i.e., the filter rule generated by control plane 401) upon matching one of the tenant filter rules, or vice versa. If route advertisements use BGP, then control plane 401 leverages the BGP route map sequence for the tenant gateway. The filter rule is implemented by configuring the chain sequence with a go to action for network address prefixes permitted by the filter rule. The provider's sequences from the filter rule are placed before sequences from the tenant in the chain. The tenant can then control what routes will be distributed by BGP via redistributions rules and a BGP out filter. If route advertisements use OSPF, tenant gateways 422-425 may be area border routers (ABRs). Control plane 401 configures don't-advertise/summarization rules on the ABR. Like with BGP, the tenant can then control what to be distributed by OSPF via distributions rules. While three specific routing protocols are mentioned above, other routing protocols may be configured differently to implement the filter rules in tenant gateways 422-425.

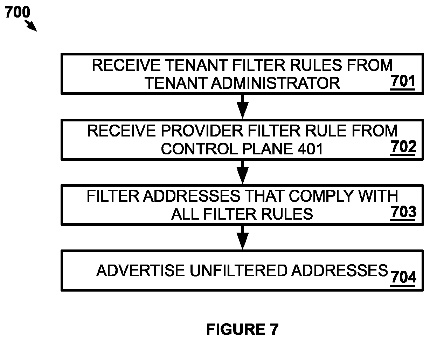

Figure 7 illustrates operation 700 to control route advertisements from tenant-controlled gateways in a software-defined data center. Operation 700 is performed by each of tenant gateways 422-425 but will be explained from the perspective of tenant gateway 422 in this example. When performing operation 700, tenant gateway 422 receives tenant filter rules from an administrator of tenant 402 (701). The administrator in this case may be a human user or a network control component for tenant 402. Tenant gateway 422 also receives a provider filter rule generated by control plane 401 (702). The tenant filter rules and the provider filter rule may be received in any order. Likewise, rules may be modified, or new rules may be received, at any time. Once implemented in tenant gateway 422, tenant gateway 422 filters out addresses that are not allowed to have routes advertised in accordance with the provider filter rule and the tenant filter rules (703). Tenant 402 advertises routes for the remaining network addresses after application of the filter rules.

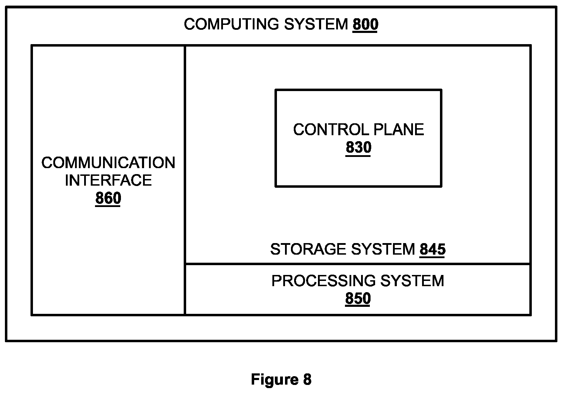

Figure 8 illustrates a computing system 800 for controlling route advertisements from tenant-controlled gateways in a software-defined data center. Computing system 800 is representative of any computing system or systems with which the various operational architectures, processes, scenarios, and sequences disclosed herein for an update service can be implemented. Computing system 800 is an example architecture for control planes 101 and 401, although other examples may exist. Computing system 800 includes storage system 845, processing system 850, and communication interface 860. Processing system 850 is operatively linked to communication interface 860 and storage system 845. Communication interface 860 may be communicatively linked to storage system 845 in some implementations. Computing system 800 may further include other components such as a battery and enclosure that are not shown for clarity.

Communication interface 860 comprises components that communicate over communication links, such as network cards, ports, radio frequency (RF), processing circuitry and software, or some other communication devices. Communication interface 860 may be configured to communicate over metallic, wireless, or optical links. Communication interface 860 may be configured to use Time Division Multiplex (TDM), Internet Protocol (IP), Ethernet, optical networking, wireless protocols, communication signaling, or some other communication format - including combinations thereof. Communication interface 860 may be configured to communicate with one or more web servers and other computing systems via one or more networks.

Processing system 850 comprises microprocessor and other circuitry that retrieves and executes operating software from storage system 845. Storage system 845 may include volatile and nonvolatile, removable, and non-removable media implemented in any method or technology for storage of information, such as computer readable instructions, data structures, program modules, or other data. Storage system 845 may be implemented as a single storage device but may also be implemented across multiple storage devices or sub-systems. Storage system 845 may comprise additional elements, such as a controller to read operating software from the storage systems. Examples of storage media include random access memory, read only memory, magnetic disks, optical disks, and flash memory, as well as any combination or variation thereof, or any other type of storage media. In some implementations, the storage media may be a non-transitory storage media. In some instances, at least a portion of the storage media may be transitory. In no examples would storage media of storage system 845, or any other computer-readable storage medium herein, be considered a transitory form of signal transmission (often referred to as "signals per se"), such as a propagating electrical or electromagnetic signal or carrier wave.

Processing system 850 is typically mounted on a circuit board that may also hold the storage system. The operating software of storage system 845 comprises computer programs, firmware, or some other form of machine-readable program instructions. The operating software of storage system 845 comprises control plane 830. The operating software on storage system 845 may further include an operating system, utilities, drivers, network interfaces, applications, or some other type of software. When read and executed by processing system 850 the operating software on storage system 845 directs computing system 800 to network routing advertisements as described herein. Control plane 830 may execute natively on processing system 805 or the operating software may include virtualization software, such as a hypervisor, to virtualize computing hardware on which control plane 830 executes. In some examples, control plane 830 may be distributed across multiple computing systems like computing system 800.

In at least one implementation, control plane 830 directs processing system 850 to identify a tenant network address space for use by a tenant of the software-defined data center. Control plane 830 further directed processing system 850 to generate a filter rule for a tenant gateway between the tenant network address space and a provider gateway outside of the tenant network address space. Also, control plane 830 directs processing system 850 to implement the filter rule in the tenant gateway. The filter rule prevents the tenant gateway from advertising network addresses outside of the tenant network address space.

The included descriptions and figures depict specific implementations to teach those skilled in the art how to make and use the best mode. For teaching inventive principles, some conventional aspects have been simplified or omitted. Those skilled in the art will appreciate variations from these implementations that fall within the scope of the invention. Those skilled in the art will also appreciate that the features described above can be combined in various ways to form multiple implementations. As a result, the invention is not limited to the specific implementations described above, but only by the claims and their equivalents.

## Claims

1. A method comprising:
in a control plane for a software-defined data center:
identifying a tenant network address space for use by a tenant of the software-defined data center;
generating a filter rule for a tenant gateway between the tenant network address space and a provider gateway outside of the tenant network address space; and
implementing the filter rule in the tenant gateway, wherein the filter rule prevents the tenant gateway from advertising network addresses outside of the tenant network address space.

2. The method of claim 1, comprising:
identifying a second tenant network address space for use by a second tenant of the software-defined data center;
generating a second filter rule for a second tenant gateway between the tenant network address space and the provider gateway; and
implementing the second filter rule in the second tenant gateway, wherein the filter rule prevents the second tenant gateway from advertising network addresses outside of the second tenant network address space.

3. The method of claim 2, wherein
the tenant network address space and the second tenant network address space do not overlap.

4. The method of any one of the claims 1 to 3, comprising:
implementing the filter rule in another tenant gateway for the tenant.

5. The method of any one of the claims 1 to 4, wherein
the tenant gateway and the provider gateway are Border Gateway Protocol peers and implementing the filter rule comprises:
configuring a Border Gateway Protocol mechanism for blocking address prefix advertisement.

6. The method of any one of the claims 1 to 5, wherein
the tenant gateway uses Open Shortest Path First to advertise address prefixes and implementing the filter rule comprises:
configuring an Open Shortest Path First mechanism to filter advertised routes.

7. The method of any one of the claims 1 to 6, wherein
the provider gateway is one of multiple provider gateways for the software-defined data center.

8. The method of any one of the claims 1 to 7, wherein
one or more tenant-provided filter rules are also implemented in the tenant gateway.

9. The method of claim 8, wherein
a configuration user interface for the tenant gateway presents the one or more tenant-provided filter rules but does not present the filter rule.

10. The method of claim 8, wherein
a configuration user interface for the tenant gateway presents the filter rule but does not allow modification of the filter rule.

11. One or more computer-readable storage media having program instructions stored thereon that, when read and executed by a processing system, direct the processing system to:
identify a tenant network address space for use by a tenant of a software-defined data center;
generate a filter rule for a tenant gateway between the tenant network address space and a provider gateway outside of the tenant network address space; and
implement the filter rule in the tenant gateway, wherein the filter rule prevents the tenant gateway from advertising network addresses outside of the tenant network address space.

12. The computer-readable storage media of claim 11, wherein
the program instructions direct the processing system to:
identify a second tenant network address space for use by a second tenant of the software-defined data center;
generate a second filter rule for a second tenant gateway between the tenant network address space and the provider gateway; and
implement the second filter rule in the second tenant gateway, wherein the filter rule prevents the second tenant gateway from advertising network addresses outside of the second tenant network address space;
wherein in particular
the tenant network address space and the second tenant network address space do not overlap.

13. The computer-readable storage media of claim 11 or 12 comprising at least one of the following features:
(A) the program instructions direct the processing system to:
implement the filter rule in another tenant gateway for the tenant;
(B) the tenant gateway and the provider gateway are Border Gateway Protocol peers and to implement the filter rule, the program instructions direct the processing system to:
configure a Border Gateway Protocol mechanism for blocking address prefix advertisement;
(C) the tenant gateway uses Open Shortest Path First to advertise address prefixes and to implement the filter rule, the program instructions direct the processing system to:
configure an Open Shortest Path First mechanism to filter advertised routes; and
(D) the provider gateway is one of multiple provider gateways for the software-defined data center.

14. The computer-readable storage media of any one of the claims 11 to 13, wherein
one or more tenant-provided filter rules are also implemented in the tenant gateway;
wherein in particular
a configuration user interface for the tenant gateway presents the one or more tenant-provided filter rules but does not present the filter rule.

15. An apparatus comprising:
one or more computer readable storage media;
a processing system operatively coupled with the one or more computer readable storage media; and
program instructions stored on the one or more computer readable storage media that, when read and executed by the processing system, direct the processing system to:
identify a tenant network address space for use by a tenant of a software-defined data center;
generate a filter rule for a tenant gateway between the tenant network address space and a provider gateway outside of the tenant network address space; and
implement the filter rule in the tenant gateway, wherein the filter rule prevents the tenant gateway from advertising network addresses outside of the tenant network address space.
